# EUROPEAN PATENT SPECIFICATION

(11) **EP 4 075 944 B1**
(45) Date of publication and mention of the grant of the patent: **23.08.2023**
(21) Application number: 20829935.4
(22) Date of filing: 18.12.2020
(51) Int. Cl.: A01G 9/14

(54) **TWO-WAY HORTICULTURE TROLLEY WITH A COARSE PRIMARY DETECTION AND A FINE SECONDARY DETECTION OF HEAD END PARTS OF TRACKS**
ZWEIWEG-GARTENBAUWAGEN MIT GROBER PRIMÄRERFASSUNG UND FEINER SEKUNDÄRERFASSUNG VON KOPFENDTEILEN VON SCHIENEN
CHARIOT D'HORTICULTURE BIDIRECTIONNEL À DÉTECTION PRIMAIRE GROSSIÈRE ET DÉTECTION SECONDAIRE FINE DE PARTIES EXTRÉMITÉ DE TÊTE DE RAILS

(30) Priority: 20.12.2019 NL 2024541
(43) Date of publication of application: 26.10.2022
(73) Proprietor: Berg Groep B.V., 2678 KZ De Lier (NL)
(72) Inventor: VAN MIL, Thomas, 2678 KZ De Lier (NL); NIBBELINK, Stef, 2678 KZ De Lier (NL); VAN DEN BERG, Mark, 2678 KZ De Lier (NL); VAN DER HOEVEN, Dennis, 2678 KZ De Lier (NL)
(74) Representative: EP&C
(86) International application number: PCT/EP2020/087198
(87) International publication number: WO 2021/123292

(56) References cited:
- KR-A- 20190 022 011
- KR-B1- 101 864 712
- NL-C2- 1 032 031
- NL-C2- 2 009 716

## Description

### FIELD OF THE INVENTION

The present invention relates to horticulture trolleys that are suitable for driving in different directions over different heights and/or types of surfaces, like paved floors and pipe-rails.

### BACKGROUND TO THE INVENTION

Such two-way trolleys are well known in horticulture to be used during the growing of plants for all kinds of operations, like crop care, protection and harvesting. For example greenhouses for the commercial growing and/or harvesting of plants, mostly have a standard lay-out with a concrete corridor and a large number of track paths perpendicular thereto with rows of plants growing at both sides thereof. Along each track path a guiding track extends, for example in the form of a pair of pipe-rails, that in particular serve as heating pipe. At head end parts of such pipe-rail tracks, turn-around pipe portions that connect left and right ones of the pairs of pipe-rails are frequently present such that a heating medium can flow from one of the pipe-rails towards another. The pipe-rails rest upon support feet such that they are supported spaced above a ground surface of the track paths. The head end parts rest upon the corridor, such that their upper guiding surfaces lie at a higher level than a running surface of the corridor, particularly over a distance in a vertical direction that is equal to a diameter of the pipe-rails.

During growing of the plants, the trolleys can be used for performing all kinds of operations thereto, while being slowly or stepwise driven over the pipe-rails. When a track path is done, the trolley can be switched towards another track path. The trolley then temporarily gets pushed sideways over the concrete corridor, that mostly extends perpendicular to a longitudinal direction of the pipe-rails. For this two-way usage, the trolley can be equipped with dedicated non-swivable driven track-wheels for driving over the pipe-rails and with dedicated swivable non-driven floor-wheels for driving over the concrete corridor.

It is known to have left and right ones of the track- and floor-wheels form part of so-called flange wheels of which an outer flange portion forms a first tread with a relative large diameter, and of which an inner cylinder portion forms a second tread with a relative small diameter. The outer flange portions are destined to form the floor-wheels and be driven with their treads over the concrete corridor, whereas the inner cylinder portions are destined to form the track-wheels and be driven with their treads over the pipe-rails. During this driving over the pipe-rails, the outer flange portions prevent that the trolley may run sideways of the pipe-rails by locking up the left and right pipe-rails between them.

It is then also known to have additional sets of non-driven floor-wheels suspended such that they are movable up and down between an inactive position in which the trolley rests upon the flange wheels and an active position in which the trolley rests upon the additional sets of floor-wheels.

Each time during a transit from driving over a pair of pipe-rails along one track path towards another pair of pipe-rails along another track path, the additional sets of floor-wheels need to be actively moved down towards their active position such that the trolley can then be manually pushed sideways over the concrete corridor towards the other pair of pipe-rails. This is time-consuming and requires quite an effort of an operator. Further it is noted that this may well lead to human error, causing the trolley to not always getting exactly lined-up with its flange wheels in front of the other pair of pipe-rails, just before the additional sets of floor-wheels are moved up again to their inactive position after which the trolley is driven with its flange wheels to drive from the corridor onto the pipe-rails.

If not exactly lined-up, this may lead to one of the outer flange portions of the flange wheels bumping against the turn-around pipe portion. In cases that such turn-around pipe portions are not present, this may even lead to a front end of the trolley accidentally being driven off the corridor into a gap that is mostly present in the track path underneath the pipe-rails. This sudden downwards dropping of the front end of the trolley is likely to damage the pipe-rails as well as all kinds of vulnerable components, like a motor, a transmission, and sensor equipment, that may be provided underneath the trolley. Besides that it shall at least be quite difficult and heavy to retrieve the trolley out of the gap back onto the corridor again.

NL-2009716 shows a trolley with a backside set of driven flange wheels, a front side set of non-driven flange wheels, and a front set of steerable swivelling floor-wheels. The treads of the swivelling floor-wheels have larger diameters than the treads of the outer flange portions of the front side non-driven flange wheels. The steerable swivelling floor-wheels are for example steerable by means of a joystick. Thus it is possible for an operator to drive and steer the trolley over the corridor, including during transits towards other pairs of pipe-rails, while this operator remains standing on a platform of the trolley.

It does however require the operator to accurately steer the trolley, which sometimes may lead to human error. It is difficult for the operator to drive and steer the trolley such accurately that it gets exactly lined-up with its track-wheels in front of the other pair of pipe-rails, particularly because the front side set of flange wheels that need to be lined-up are not directly visible for the operator, because of being placed underneath a front end of the trolley. Occasional misalignment shall immediately lead to one of the outer flange portions of the flange wheels bumping against the turn-around pipe portion or lead to a front end of the trolley accidentally being driven off the corridor into the gap.

NL-1032031 also shows a trolley with a backside set of driven flange wheels, a front side set of non-driven flange wheels, and a front set of two steerable swivelling floor-wheels. Here the trolley can further be equipped with a GPS-receiver for guiding it through horticulture surroundings. It is also possible to provide a magnetic field sensor underneath the trolley, whereas the corridor then gets provided with a magnetic guiding track to be followed. For example such magnetic guiding tracks then can be embedded in the concrete corridor to extend from one head end part of the pipe-rails towards an adjacent one.

However, GPS is rather inaccurate inside buildings like greenhouses, whereas, since the magnetic guiding track to be provided is vulnerable, it is necessary to accurately cut slots in the concrete corridor by means of a slot cutter, then carefully place the magnetic track therein, after which the slots are filled again with hardenable mass, for example concrete. This is a laborious process and makes the entire navigation system rather inflexible in that it is not possible to easily and quickly change the courses of the magnetic tracks should that be desired.

Furthermore it is emphasized that the pipe-rails are known to on the one hand be carried by supports that rest freely on top of the ground surfaces of the track paths and on the other hand be directly supported with their head end parts on top of the corridor, that is to say without being fixedly connected thereto. Because of that the pipe-rails may get displaced sideways somewhat in either the left or right direction now and then, for example because something or someone accidentally bumps against them.

Therefore their actual positions along the track paths and on top of the corridor may deviate over time in unknown amounts and directions from their initial starting positions. Therefore those known navigation systems inevitably still bring along the risk of the trolley not getting exactly lined-up with its track-wheels in front of the new pair of pipe-rails, and may again lead to one of the outer flange portions bumping against the turn-around pipe portion or lead to a front end of the trolley accidentally being driven off the corridor into the gap.

KR 101 864 712 B1 illustrates an alternative two-way horticulture trolley.

### BRIEF DESCRIPTION OF THE INVENTION

The present invention aims to overcome those disadvantages at least partly or to provide a usable alternative. In particular the present invention aims to provide a fully safe and reliable autonomously driving two-way horticulture trolley that is particularly capable of repeatedly having the trolley transit via a corridor towards another one of tracks that extend in between and along rows of growing plants, while each time automatically lining-up its front set of track-wheels with that other track.

According to the present invention this aim is achieved by a two-way horticulture trolley for driving in different directions over different heights and/or types of surfaces, like paved floors and pipe-rails, according to claim 1. The trolley comprises a frame, track-wheels for driving the trolley forward or backwards in a first direction over tracks, like pipe-rails, that extend in the first direction in between and along plant growing paths, floor-wheels for driving the trolley sideways in a second direction over a corridor, like a paved floor, that extends in the second direction along ends of the tracks, one or more driving motors configured to rotate the track- and/or floor-wheels around their horizontal center axis for driving the trolley forward or backwards respectively sideways, a control unit for controlling the one or more driving motors, and a detector unit. According to the inventive thought the detector unit comprises one or more track detectors that are configured for performing a primary detection whether or not a head end part of one of the tracks is present within a certain area in front of at least a left or right one of the track-wheels, a secondary detection whether or not left and right portions of the head end part of the one of the tracks lie lined-up with both the left and right ones of the track-wheels, and sending respective detection signals to the control unit in dependence of the performed primary and secondary detection, wherein the control unit is configured to control the one or more driving motors in dependence of the received respective detection signals.

Thus the invention advantageously makes it possible to have the trolley operate completely autonomously. The control unit is able to automatically drive the trolley onto the corridor when coming from the track and vice versa, and automatically move it from path to path during those transitions. No specific new positioning facilities, like magnetic guiding tracks that must be embedded in the corridor, need to be installed in the horticulture environment for that. The one or more track detectors are well able to provide the control unit with only a limited number of detection signals, with which the control unit can already accurately determine real-time positions of the trolley relative to the tracks in the horticulture environment, including determination of the moment that the trolley has just left a head end part of one of the tracks, including determination of the moment that the trolley has roughly approached a head end part of another one of the tracks, and including the moment that the trolley has accurately lined-up with that new head end part. The invention is based on the insight that all this can already been done with a simple configuration of one or more track detectors, and in particular the order in which they get activated or not during leaving and approaching of head end parts of the tracks.

Owing to the fact that the invention during both its coarse primary and fine secondary detections makes use of actual detecting of the track itself, it is able to always achieve and guarantee a 100% exact line-up, irrespective of any deviations in real-time positions of the tracks compared to their initial starting positions. This makes it possible to keep on using tracks, like pipe-rails, that do not have to be fixedly connected to the corridor or the ground floor of the track paths, and that might deviate in their actual position with tolerances of for example plus or minus 10-15 cm. A risk of the trolley not being able to safely drive from the corridor onto one of the tracks, but for example prematurely get blocked or worse get driven off the corridor, is fully prevented.

In a preferred embodiment the control unit can be configured to, as many times as is desired, for example as many times as there are track paths to be switched between, each time it is detected by the one or more track detectors that the trolley is driven with its track-wheels off one of the head end parts of the tracks, to autonomously control the one or more driving motors to perform the following steps:
- to rotate the floor-wheels for driving the trolley sideways in the second direction over the corridor over a pre-programmed distance;
- to rotate the track- and/or floor-wheels for driving the trolley forward in the first direction over the corridor until the primary detection detects that an adjacent one of the head end parts of the tracks is present in front of the track-wheels; and
- to rotate the floor-wheels for driving the trolley sideways in the second direction over the corridor until the secondary detection detects that the track-wheels are lined-up with left and right portions of the track.

This makes it possible to have the control unit autonomously repeat the following steps a number of times:
- have the trolley drive one or more times forward and backward in the first direction with its track-wheels over one of the tracks in between and along growing plants;
- have the trolley drive backwards in the first direction with its track-wheels off the head end part of that track onto the corridor;
- have the floor-wheels placed in a position steering in the second direction and carrying the trolley;
- have the trolley drive sideways in the second direction with its floor-wheels over the corridor over a pre-programmed distance;
- have the floor-wheels placed in a position steering either in the first direction or no longer carrying the trolley;
- have the trolley drive forward in the first direction with its track- and/or floor-wheels over the corridor until the primary detection detects that one of the head end parts of another one of the tracks is present in front of the track-wheels;
- have the floor-wheels placed in a position steering in the second direction and carrying the trolley;
- have the trolley drive sideways in the second direction with its floor-wheels over the corridor until the secondary detection detects that the track-wheels are lined-up with left and right portions of that other one of the tracks;
- have the floor-wheels placed in a position steering either in the first direction or no longer carrying the trolley;
- have the trolley drive forward in the first direction off the corridor and with its track-wheels onto the head end part of that other one of the tracks; and
- have the trolley drive one or more times forward and backward in the first direction with its track-wheels over that other one of the tracks in between and along growing plants.

This advantageously makes it possible to fully reliably and quickly have the trolley automatically perform two-step coarse-to-fine line-up positionings during transitions between track paths, after which the trolley can be controlled to also automatically drive forward off the corridor and onto the track. An operator is not needed to be present for this. The trolley can do this all by itself autonomously without human help, although it is noted that the primary and secondary detections according to the invention can also be used to help an operator to more quickly and reliably perform such line-ups when actively driving and steering the trolley by himself.

The trolley for example may comprise a data collector for automatically collecting health, growth and/or harvest data of the rows of plants the trolley drives past. Owing to the accurate line-ups according to the invention with each new track including any possible deviations of real-time positions of those tracks, such measurements can now also safely run outside normal working hours, like at night or during weekends. Thanks to this a grower may get clear insight in his plants at each specific location in the greenhouse without having to disrupt any other activities of its employees.

The data collector may use special cameras to measure and map the plants, particularly fruits and vegetables growing from the plants. Images made by the cameras can be analysed on the spot by special software and/or displayed on a grower's screen.

The trolley then is able to measure large areas of plants, particularly the fruits and vegetables growing from the plants, like trusses of hanging tomatoes, while counting both quantity and maturity. The trolley is able to do that autonomously as frequently as desired, like every night, and always in exactly the same way. This makes the trolley a perfect sensing instrument that provides insight into numbers and colour stages. Linking this information to practical data from a greenhouse makes an accurate estimation of harvest possible. This allows a grower to ensure a high level of delivery reliability. That, in turn, allows the grower to make better price agreements and realize higher profit margins.

In a preferred embodiment the detector unit may comprise at least two track detectors, of which a first and second one are provided for detections at locations straight in front of the track-wheels. With the aid of the configuration of the at least two track detectors and the order in which they are activated upon actual detection of a track part, the position of the trolley relative to the track can be determined. If for example the trolley is driven forward over the corridor towards an assumed coarse location of the track, and merely one of the track detectors gets activated, then the control unit knows that the trolley must be stopped from driving further forwards. It then also knows that the trolley first needs to be driven sideways in that left or right second direction where the activated one of the two track detectors has its left or right detection location orientated, until both track detectors get activated upon actual detection of track parts. Then the control unit knows that its front track-wheels are perfectly lined-up with the left and right portions of the head end part of the track, and that the trolley can subsequently safely be driven off the corridor onto that track.

In addition thereto the first and second track detector then can be positioned at or underneath a front end of the frame, wherein the first track detector lies straight in front of left ones of the track-wheels, and wherein the second track detector lies straight in front of right ones of the track-wheels. This is a simple, reliable and well protected positioning of those track detectors, that then each only need to detect straight downwards for a track part to be present underneath them or not.

In a further preferred embodiment the detector unit may comprises at least three track detectors, of which a third one is provided for detection at an intermediate location behind the first and second detection locations but still in front of the track-wheels. In addition thereto the third track detector then can be positioned at or underneath the front end of the frame, wherein the third track detector lies behind of the first and second track detectors but still in front of the track-wheels.

With the aid of the configuration of the at least three track detectors and the order in which they are activated upon actual detection of a track part, the position of the trolley relative to the track can be determined even more accurate. If for example the trolley is driven forward over the corridor towards an assumed coarse location of the track, and merely one of the first and second detectors gets activated, then owing to the provision of the third track detector, the control unit can now exactly stop the trolley from driving further forwards as soon as this third track detector also gets activated. This can particularly be important when the head end parts of the tracks comprise gradually curved portions that connect left and right portions of the tracks. For such gradually curved head end part portions, the secondary detection during which the first and second detectors both need to get activated simultaneously during the sideways driving of the trolley, can only take place if the trolley has been driven such far in the first direction that the first and second detectors have passed the gradually curved portion of the track in this first direction. This can now be guaranteed by means of the third track detector.

In a preferred further embodiment each of the one or more track detectors may comprise a metal- and/or height-detector, in particular an inductive sensor that is configured to detect a presence of metal tracks, like metal pipe-rails. The individual detectors then in particular may be covered by a dish-shaped cover plate.

In a preferred further or alternative embodiment the four floor-wheels may each be individually turnable around an own vertical axis relative to the frame between at least the first and second direction, wherein one or more turning actuators are provided for controlling the floor-wheels to turn individually around their own vertical axis between at least the first and second direction and vice versa.

For that the control unit can be configured to, as many times as is desired, for example as many times as there are track paths to be switched between, each time it is detected by the detector unit that the trolley is driven with its track-wheels off one of the head end parts of the tracks, to autonomously control the one or more driving motors and turning actuators to also perform the following steps:
- to turn the floor-wheels from the first towards the second direction preceding the step of rotating the floor-wheels for driving the trolley sideways in the second direction over the corridor over the pre-programmed distance;
- to turn the floor-wheels from the second towards the first direction preceding the step of rotating the floor-wheels for driving the trolley forward in the first direction over the corridor until the primary detection detects that an adjacent one of the head end parts of the tracks is present in front of the track-wheels;
- to turn the floor-wheels from the first towards the second direction preceding the step of rotating the floor-wheels for driving the trolley sideways in the second direction over the corridor until the secondary detection detects that the track-wheels are lined-up with left and right portions of the track; and
- to turn the floor-wheels from the second towards the first direction preceding the step of rotating the track- and/or floor-wheels for driving the trolley forward in the first direction onto and over the track.

The individual turning of the floor-wheels can be done with the aid of one and the same driving motor and suitable transmissions towards each of the turning actuators. Preferably however for each of the floor-wheels an individual turning actuator can be provided, in particular a stepper motor. This makes it possible to individually steer the floor-wheels, which may be advantageous during other manoeuvres of the trolley over the corridor or other paved floors, for example towards a parking location where it can automatically charge its batteries.

Preferably each floor wheel then may comprise a flexible rubber tire as tread. This prevents the corridor to get damaged during turnings of the floor-wheels.

Likewise, it is noted that the driving of the floor-wheels can be done with the aid of one and the same driving motor and suitable transmissions towards each of the wheels. Preferably however for each of the floor-wheels an individual driving motor can be provided that is co-turnable therewith.

The invention also relates to a non-volatile storage medium for the control unit to perform the inventive method steps.

Further preferred embodiments of the invention are stated in the dependent subclaims.

### DETAILED DESCRIPTION OF THE DRAWINGS

The invention shall be explained in more detail below with reference to the accompanying drawing in which:
- Fig. 1a and 1b show top and bottom perspective views of an embodiment of a two-way horticulture trolley according to the invention with floor-wheels turned for driving in X-direction;
- Fig. 2 shows the bottom perspective view of fig. 1b with the floor-wheels individually turned over plus and minus 90 degrees for driving in Y-direction;
- Fig. 3a-i show a transit of the trolley from one pair of pipe-rails, via a paved corridor, towards another pair of pipe-rails including the two-step line-up; and
- Fig. 4a and 4b show the top and bottom perspective views of fig. 1a and 1b with the floor-wheels individually turned over plus and minus 45 degrees for turning its frame around its central axis.

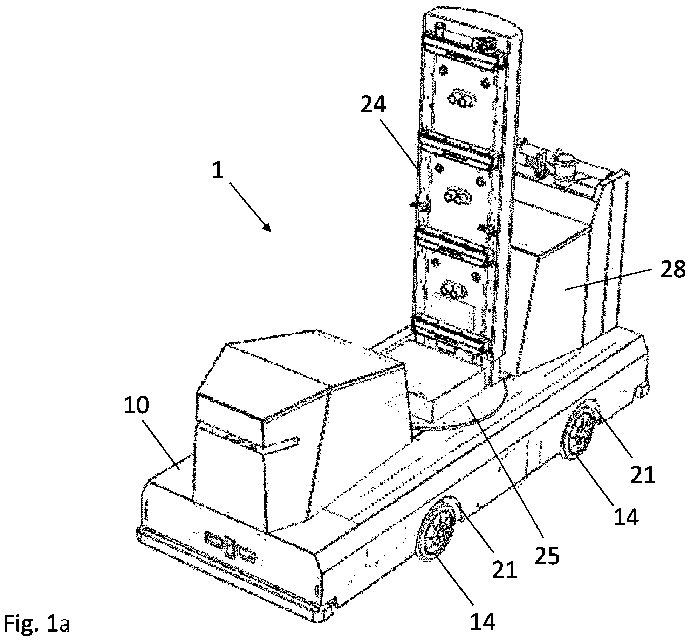

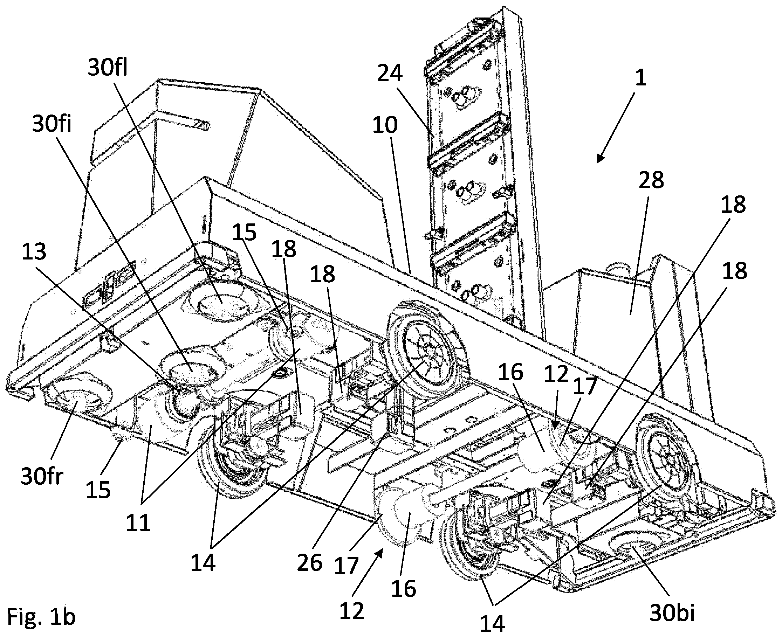

In fig. 1a and b an electrically powered horticulture pipe-rail trolley is shown that has been given the reference numeral 1. The trolley 1 comprises an elongate, substantially rectangular shaped frame 10 underneath which two sets of track-wheels 11, 12 for driving the trolley 1 over tracks, and two sets of floor-wheels 14 for driving the trolley 1 over floors, are provided.

The front set of track-wheels 11 is formed by two cylindrical rollers that are rotatable around a common horizontal center axis, and that are provided at a front side of the trolley 1. A controllable driving electromotor 13 is provided for rotating the front set of track-wheels 11 around their common horizontal center axis for driving the trolley forward or backwards over a track. Left and right guiding rollers 15 are positioned just in front of the rollers for keeping the front side of the trolley 1 centred on a track during driving over such a track and for at a same time protecting front left and right ones of the floor-wheels 14 from rubbing against sidewalls of such a track.

The back set of track-wheels 12 is formed by two flange wheels that are freely rotatable around a common horizontal center axis, and that are provided at a back side of the trolley 1. The back set of track-wheels 12 is non-driven and merely serve to help carry the trolley 1 when it is driven over a track. Each flange wheel comprises a cylindrical roller part 16 and an outer flange part 17. The flange parts 17 are positioned spaced at a distance that is slightly larger than an outer width of the tracks for keeping the back side of the trolley 1 centred on a track during driving over such a track and for at a same time protecting back left and right ones of the floor-wheels 14 from rubbing against sidewalls of such a track.

Each of the four floor-wheels 14 is rotatable around its own horizontal center axis and comprises its own flexible rubber tire as tread. The outer diameter of the floor-wheels 14 is larger than the outer diameter of the outer flange parts 17. Each of the floor-wheels 14 comprises an own controllable driving electromotor 18, preferably a controllable stepper motor, that is provided for rotating their respective floor-wheel around its own horizontal center axis for driving the trolley 1 over a floor.

Each of the floor-wheels 14 together with its own controllable driving electromotor 18 is mounted on an own turntable 20 via which it is turnable around an own vertical axis for steering their respective floor-wheel 14 in aimed directions. The turnability of the turntables 20 here goes from -50 degrees to 105 degrees.

A turning actuator, preferably an own controllable stepper motor, is provided for each of the turntables 20 as individual turning actuator for controlling their respective floor-wheels 14 to turn individually around its own vertical axis. The turning actuators can also be mounted on their own respective turntables 20. In the embodiment shown the turning actuators are provided above the turntables 20 at positions more inside the frame 10.

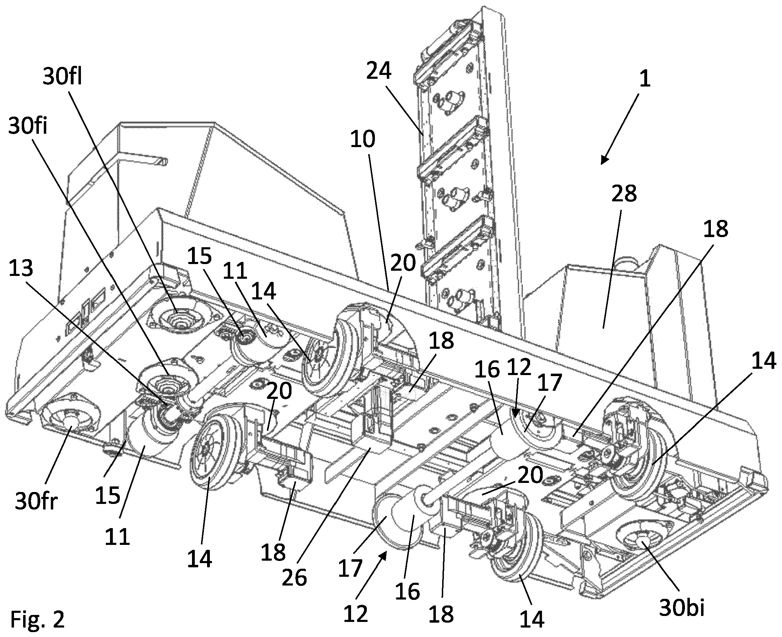

In fig. 2 a situation is shown in which each of the four turntables 20, with its own respective set of floor-wheel 14, driving electromotor 18 and turning actuator, has been turned individually around its own vertical axis over turning angles of 90 degrees. This makes it possible for the trolley 1 to be driven sideways.

The floor-wheels 14 are provided eccentrically underneath their turntables 20. In their fig. 1 position they are orientated in line with a longitudinal axis of the trolley 1. The trolley 1 then can be driven forward or backward. In their fig. 2 position they are orientated transverse to the longitudinal axis of the trolley 1. The trolley 1 then can be driven sideways.

It is foreseen to have each of the floor-wheels 14 turned clockwise or counter-clockwise between their fig. 1 and 2 positions in such a way that the stability of the trolley 1 does not get negatively influenced. For that the left-front-side and right-back-side floor-wheels 14 get turned clockwise (seen from above), and the right-front-side and left-back-side floor-wheels 14 get turned counter-clockwise (seen from above) when getting forced by their turning actuators to turn from the fig. 1 towards the fig. 2 positions, and vice versa, when getting forced to turn back again. This causes the front and back floor-wheels 14 to be turned such that in their fig. 1 positions their left and right ones lie at maximum width from each other, and in the fig. 2 positions their front and back ones lie at maximum distance from each other.

In order for the floor-wheels 14 to not get blocked by side walls of the frame 10 during those turnings, the side walls are provided with semi-circular cut-outs 21.

On top of the frame 10 a data collector 24 is provided that comprises an upright standing column mounted on a turnable platform 25 and equipped with a number of cameras and flash lights above each other. A turning actuator 26, preferably also a controllable stepper motor, is provided underneath the frame 10 for the turnable platform as turning actuator for controlling the platform 25 to turn individually around its own vertical axis. The data collector 24 is configured for automatically collecting health, growth and/or harvest data of plants along which the trolley 1 drives past during operation. In the alternative other kinds of autonomous operation units can also be provided on top of the frame 10, like a leaf cutter, harvesting or spraying robot.

The trolley 1 comprises a programmable control unit 28 that has a storage medium for storing machine readable instructions. The control unit 28 is configured for controlling the driving electromotors and the turning actuators. The trolley comprises one or more rechargeable batteries for energizing the respective driving electromotors and turning actuators, and possibly also for energizing other electrical equipment that might be provided on the trolley 1.

The trolley 1 can thus be driven at a safe speed over tracks that extend along track paths in between rows of plants to perform an aimed operation like said data collection in between the rows of plants, especially in high-wire crops. The trolley 1 can thus also reliably be driven at a safe speed over floors, like corridors that extend along head end parts of the tracks.

A detector unit with a total of four track detectors 30 is provided underneath the frame 10. Each of the track detectors 30 comprises an inductive sensor covered by a dish-shaped cover plate and configured to detect whether or not a part of a metal track lies straight underneath them and for sending corresponding detection signals to the control unit 28.

Front left and right track detectors 30fl and 30fr are positioned underneath a front end of the frame 10 straight in front of the left and right track-wheels 11 at a spaced distance. A front intermediate track detector 30fi is also positioned underneath the front end of the frame 10 and lies in a same horizontal face as the front left and right track detectors 30fl, 30fr. The three front track detectors 30fl, 30fr, 30fi lie at corners of an imaginary triangle that points backwards.

A back intermediate track detector 30bi is positioned underneath a back end of the frame 10 and lies in a same horizontal face as the front track detectors 30fl, 30fr. The back intermediate track detector 30bi lies at a same longitudinal center line of the trolley 1 as the front intermediate track detector 30fi.

The control unit 28 is configured for determining all kinds of positions of the trolley 1 relative to the tracks in dependence of detection signals it receives from the track detectors 30.

The driving electromotors 13, 18 preferably are equipped with variable-speed drives, for example of the variable-frequency generator type, and/or are equipped with sensors, like Hall-sensors, that can be used for counting numbers of rotations of the driving electromotors 13, 18 and for sending corresponding speed indication signals resp. travelling distance indication signals to the control unit 28. The control unit 28 then can also be configured to use those speed indication signals resp. travelling distance indication signals in combination with the detection signals to further determine all kinds of positions of the trolley 1 along the tracks themselves during operations like said data collection in between the rows of plants, as well as on the floor inside the greenhouse environment during for example transits between tracks.

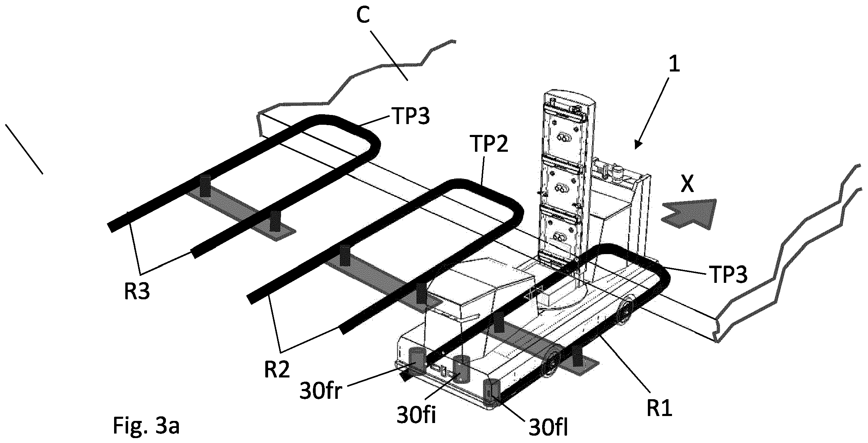

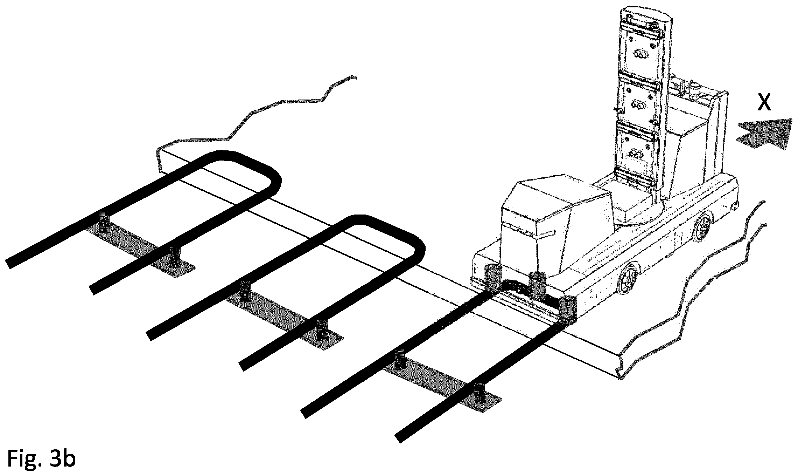

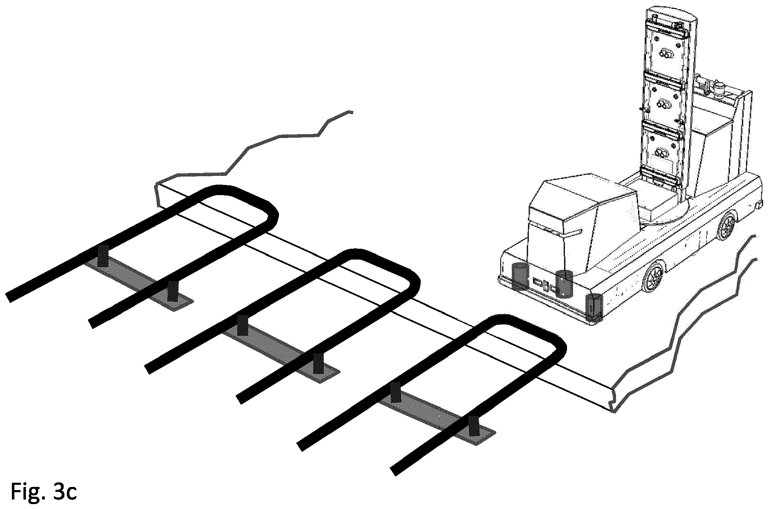

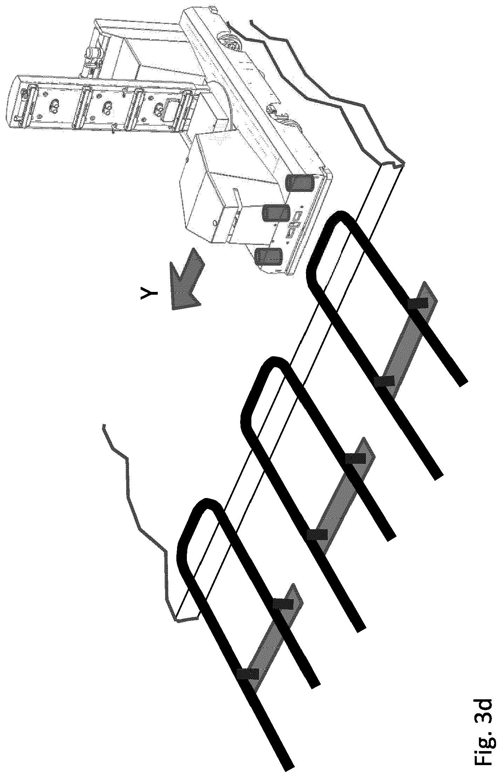

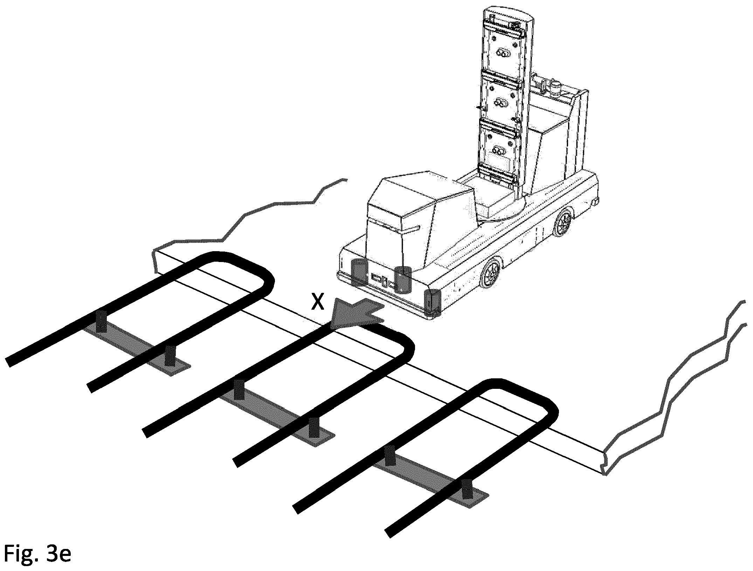

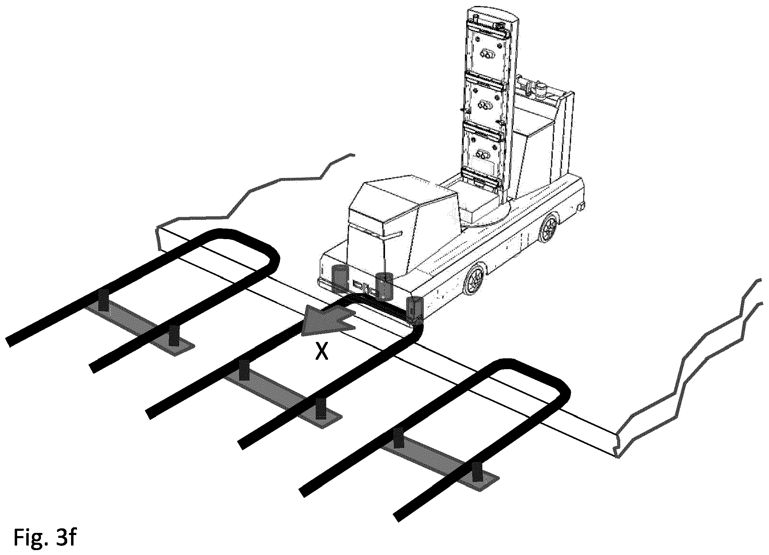

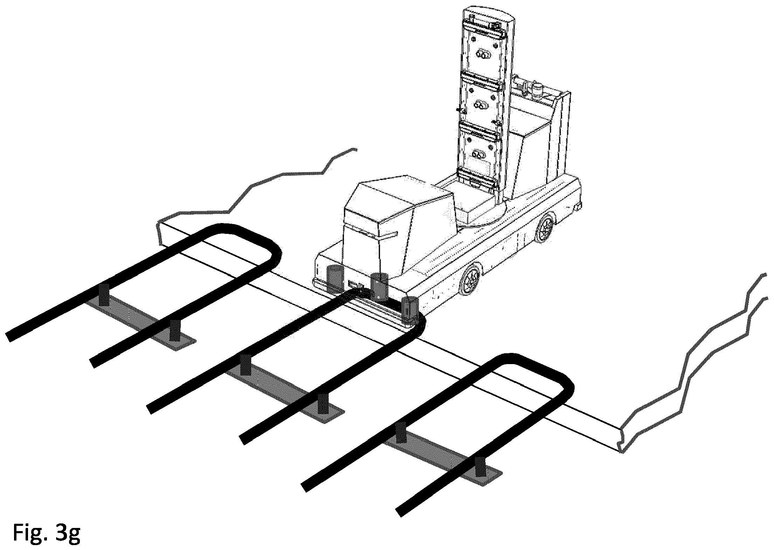

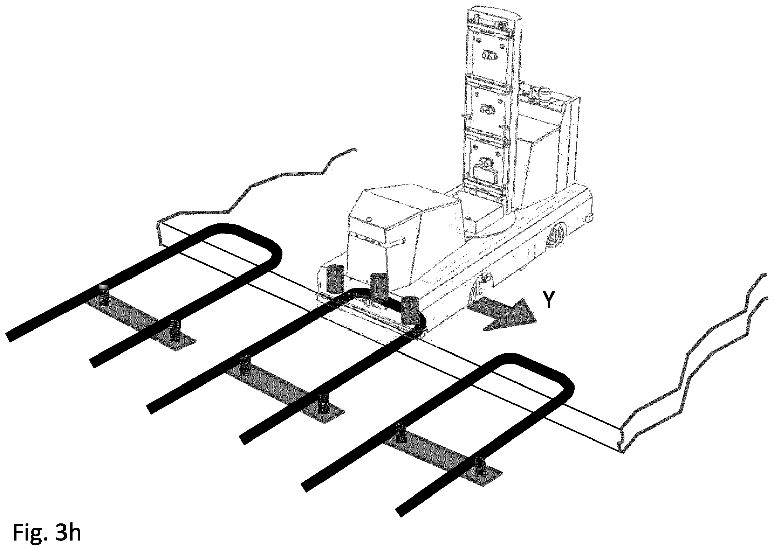

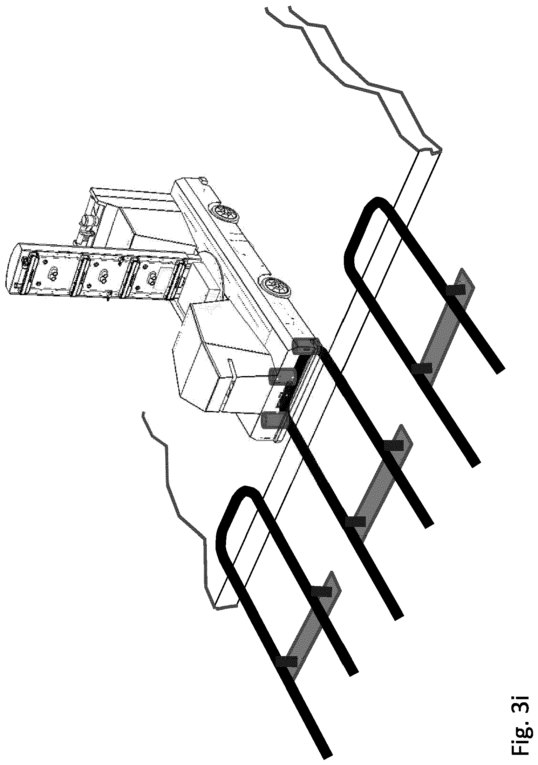

This shall be further explained with reference to fig. 3, where the trolley 1 is shown while autonomously driving in a greenhouse environment over pairs of rails R or over a corridor C. Shown are three pairs of such rails R, of which each pair has its left and right rails R connected with each other by a turn-around portion TP at its head end part. The pairs of rails R are formed here by heating pipes that extend above a cultivation floor CF in a greenhouse at regularly spaced positions. Between the pairs of rails R, cultivation paths are left free for rows of plants (not shown) to be grown. The rails R extend in horizontal directions X that are perpendicular to a horizontal direction Y along which the corridor C extends.

In fig. 3a a situation is shown in which the trolley 1 is just finishing driving itself autonomously forward over the first pair of rails R1 with the data collector 24 facing leftwards for scanning the plants growing on its left side, and backwards with the data collector 24 facing rightwards for scanning the plants growing on its right side. As soon as the back intermediate track detector 30bi then gives a detection signal to the control unit 28, the control unit 28 knows that the head end part of the rails R1 is reached and it shall slow down the driving electromotor 13 to slowly start driving off this first pair of rails R1. The control unit 28 then shall also activate at least the two back driving electromotors 18 such that the back floor-wheels 14 shall automatically help to drive the trolley 1 off the rails R1 as soon as they get enough grip onto the corridor C. With that the back floor-wheels 14 shall also lift up the back end of the trolley 1 somewhat such that the back track-wheels 12 do not get to touch the corridor C.

In fig. 3b a situation is shown in which the trolley 1 is already driving with all four floor-wheels 14 over the corridor C. With that the front floor-wheels 14 shall also lift up the front end of the trolley 1 somewhat such that the front track-wheels 11 do not get to touch the corridor C as well. As soon as all three front track detectors 30fl, 30fr, 30fi then give a detection signal to the control unit 28, the control unit 28 knows that the entire trolley 1 is about to leave the head end part TP of the rails R1 behind it. It shall then stop the driving electromotor 13 and shall have the driving electromotors 18 drive the trolley 1 further backwards in the direction X over a pre-programmed distance, for example at least 25 cm.

This situation is shown in fig. 3c. The control unit 28 then shall activate the turning actuators to turn the floor-wheels 14 over angles of 90 degrees such that they are each placed in a position steering in the direction Y.

This situation is shown in fig. 3d. Subsequently it shall activate the driving electromotors 18 to drive the trolley 1 sideways in the right direction Y with its floor-wheels 14 over the corridor C over a pre-programmed distance that corresponds with the distance towards the adjacent second pair of rails R2, for example approximately 1,6 m. The control unit 28 then shall activate the turning actuators to turn the floor-wheels 14 over angles of 90 degrees such that they are each placed in a position steering in the direction X.

This situation is shown in fig. 3e. Subsequently it shall activate the driving electromotors 18 to drive the trolley 1 with its floor-wheels 14 over the corridor C forward in the direction X. As soon as one of the front left or right detectors 30fl, 30fr (in the embodiment shown the front left track detector 30fl) then gives a detection signal to the control unit 28, the control unit 28 knows that the head end part of the rails R2 is reached.

This situation is shown in fig. 3f. The control unit 28 then shall slow down the driving electromotors 18 to slowly start driving further forwards in the direction X towards the head end part of the second pair of rails R2. As soon as the front intermediate track detector 30fi then gives a detection signal to the control unit 28, the control unit 28 knows that the primary detection situation is reached in which the front end of the trolley 1 is neatly positioned over the head end part of the rails R2, and shall stop the driving electromotors 18.

This situation is shown in fig. 3g. The control unit 28 then shall activate the turning actuators to turn the floor-wheels 14 over angles of 90 degrees such that they are each placed in a position steering in the direction Y.

This situation is shown in fig. 3h. Subsequently it shall activate the driving electromotors 18 to drive the trolley 1 sideways in the left or right direction Y (in the embodiment shown the left direction) with its floor-wheels 14 over the corridor C. As soon as both the front left track detector 30fl as well as the front right track detector 30fr then simultaneously give detection signals to the control unit 28, the control unit 28 knows that the secondary detection situation is reached in which the front track-wheels 14 are exactly lined-up with the left and right rails of the second pair of rails R, and shall stop the driving electromotors 18.The control unit 28 then shall activate the turning actuators to turn the floor-wheels 14 over angles of 90 degrees such that they are each placed in a position steering in the direction X.

This situation is shown in fig. 3i. Subsequently it shall activate the driving electromotors 18 to drive the trolley 1 with its floor-wheels 14 over the corridor C forward in the direction X. The control unit 28 shall then also activate the driving electromotor 13 such that as soon as the front track-wheels 12 lose their grip on the corridor C, the trolley 1 also gets driven forward over the rails R2 by the front track-wheels 11. As soon as the back intermediate track detector 30bi then gives a detection signal to the control unit 28, the control unit 28 knows that the trolley 1 has arrived with all four track-wheels 11, 12 on the rails R2, and it shall stop the driving electromotors 13 and 18.

The transit is then complete and the trolley 1 can drive itself autonomously forward over the second pair of rails R2 with the data collector 24 facing leftwards for scanning the plants growing on its left side, and backwards with the data collector 24 facing rightwards for scanning the plants growing on its right side. After which the above transit steps can be repeated.

Besides the forward, backward and sideways turning positions as shown in fig. 1, 2 and 3, it is also possible to have the turning actuators position them in other turning positions. Thus the trolley 1 can advantageously be controlled by the control unit 25 to navigate itself along all kinds of routes towards all kinds of locations inside the greenhouse environment.

It is also possible for the trolley 1 to manoeuvre in truly limited spaces owing to the fact that the floor-wheels 14 can be individually orientated in different directions.

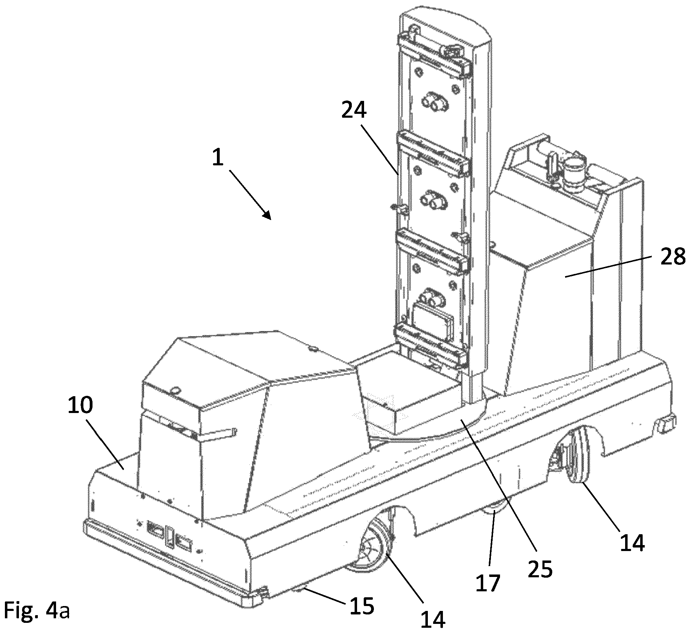

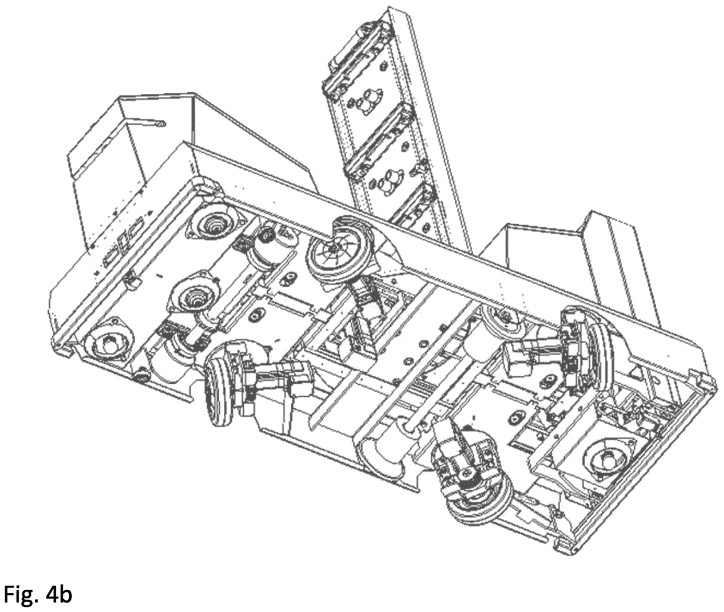

In fig. 4 a situation is shown in which each of the four turntables 20, with its own respective set of floor-wheel 14, driving electromotor 18 and turning actuator, has been turned individually around its own vertical axis over turning angles such that they all get orientated tangentially around a center point of the frame 10 of the trolley 1 (in the embodiment shown turning angles of 45 degrees). This makes it possible for the entire trolley 1 to be turned around its center point without further having to be displaced forward or backward at all. Thus the trolley 1 can change directions even in very narrow corridors or at other tight floor spaces.

Besides the shown and described embodiments, numerous variants are possible. For example the dimensions and shapes of the various parts can be altered. Also it is possible to make combinations between advantageous aspects of the shown embodiments.

Instead of using driving electromotors or turning actuators other kinds of drives can be used. All kinds of materials can be used for making the track-wheels. Preferably however they are made of plastic, like for example nylon.

Instead of using distinctive sets of track-wheels and floor-wheels it is also possible to use flange wheels of which the outer flange portions form the floor-wheels and of which the inner cylinder portions form the track-wheels. By then also making the flange wheels individually turnable by suitable controllable turning actuators around their own vertical axis relative to the frame between at least the forward/backwards direction X and the left or right sideways direction Y, the above described transit steps can also be performed.

Instead of making the driven floor-wheels turnable between the forward/backwards and sideways directions, it is also possible to have them continuously orientated in the sideways direction while at a same time suspending them such that they are movable up and down between an inactive position in which the trolley does not rest upon them, but for example upon outer flange portions of flange wheels that form the front and back track-wheels, and an active position in which the trolley rests upon them. The trolley then as it were comprises sets of floor-wheels that are continuously orientated in the forward/backwards direction and sets of floor wheels that are continuously orientated in the left/right sideways directions.

Further it is noted that the track-wheels and floor-wheels can also be designed/dimensioned for other heights and/or types of surfaces for the trolley to be driven over.

Instead of using metal-detectors, also height-detectors can be used that are positioned and configured to be activated as soon as they bump against a head end portion of a track that lies raised relative to the floor. It is even possible to use "head end part track"-image recognition as track detector(s), and have the control unit perform the two-step coarse/fine positioning according to the invention also for types of tracks that are not increased or decreased in height nor have metal track parts, but merely tracks at a same height as the floor.

It is also possible to provide the front end of the trolley with an array of track-detectors that are positioned sideways of each other over the width of the trolley. This makes it possible to also perform the two-step coarse/fine positioning according to the invention also for types of tracks that do not comprise turn-around portions at their head end parts, but that merely comprise left and right track portions. The control unit than also may know from the order in which it receives detection signals out of the array of track detectors how the trolley's position on the corridor is relative to the actual track position during the primary detection, including knowledge about in which sideways direction, left or right, it needs to drive during the secondary detection.

It is also possible to provide a multiple scissor mechanism via which a platform can be adjusted in height, which platform can be bordered and provides access for an operator and/or workers to take position on top of it. An operator panel then can also be provided for the operator to give forward or backward driving speed instructions, height adjustment instructions, etc. to a programmable control unit of the trolley. The control unit also comprises a storage medium for storing machine readable instructions.

It should be understood that various changes and modifications to the presently preferred embodiments can be made without departing from the scope of the invention, and therefore will be apparent to those skilled in the art. It is therefore intended that such changes and modifications be covered by the appended claims.

## Claims

1. Two-way horticulture trolley (1) for driving in different directions over different heights and/or types of surfaces, like paved floors and pipe-rails, comprising:
- a frame (10);
- track-wheels (11, 12) for driving the trolley (1) forward or backwards in a first direction (X) over tracks (R), like pipe-rails, that extend in the first direction (X) in between and along plant growing paths;
- floor-wheels (14) for driving the trolley (1) sideways in a second direction (Y) over a corridor (C), like a paved floor, that extends in the second direction (Y) along ends of the tracks (R);
- one or more driving motors (13, 18) configured to rotate the track- and/or floor-wheels (11, 12, 14) around their horizontal center axis for driving the trolley (1) forward or backwards respectively sideways;
- a control unit (28) for controlling the one or more driving motors (13, 18); and
- a detector unit,
**characterized in that,**
the detector unit comprises one or more track detectors (30) that are configured for:
• performing primary detections whether or not a head end part (TP) of one of the tracks (R) is present within a certain area in front of at least a left or right one of the track-wheels (11, 12);
• performing secondary detections whether or not left and right portions of the head end part (TP) of the one of the tracks (R) lie lined-up with both the left and right ones of the track-wheels (11, 12); and
• sending respective detection signals to the control unit (28) in dependence of the performed primary and secondary detection,
wherein the control unit (28) is configured to control the one or more driving motors (13, 18) in dependence of the received respective detection signals.

2. Two-way horticulture trolley according to claim 1, wherein the detector unit comprises at least two track detectors (30), of which a first and second one (30fl, 30fr) are provided for detections at locations straight in front of the track-wheels (11, 12).

3. Two-way horticulture trolley according to claim 2, wherein the first and second track detector (30fl, 30fr) are positioned at or underneath a front end of the frame (10), wherein the first track detector (30fl) lies straight in front of left ones of the track-wheels (11, 12), and wherein the second track detector (30fr) lies straight in front of right ones of the track-wheels (11, 12).

4. Two-way horticulture trolley according to claim 2 or 3, wherein the detector unit comprises at least three track detectors (30), of which a third one (30fi) is provided for detection at an intermediate location in front of the track-wheels (11, 12, 14).

5. Two-way horticulture trolley according to claim 4, wherein the third track detector (30fi) is positioned at or underneath the front end of the frame (10), wherein the third track detector (30fi) lies behind of the first and second track detectors (30fl, 30fr) but still in front of the track-wheels (11, 12).

6. Two-way horticulture trolley according to one of the preceding claims, wherein each of the one or more track detectors (30) comprises a metal- and/or height-detector, in particular an inductive sensor that is configured to detect a presence of metal tracks (R), like metal pipe-rails, and more in particular covered by a dish-shaped cover plate.

7. Two-way horticulture trolley according to one of the preceding claims, wherein each floor wheel (14) comprises a flexible rubber tire as tread.

8. Two-way horticulture trolley according to one of the preceding claims, wherein the trolley comprises a data collector (24) for automatically collecting health, growth and/or harvest data of plants the trolley (1) drives past.

9. Two-way horticulture trolley according to one of the preceding claims, wherein the floor-wheels (14) are each individually turnable around an own vertical axis relative to the frame (10) between at least the first and second direction (X, Y),
wherein one or more turning actuators are provided for controlling the floor-wheels (14) to turn individually around their own vertical axis between at least the first and second direction (X, Y) and vice versa.

10. Two-way horticulture trolley according to claim 9, wherein for each of the floor-wheels (14) an individual turning actuator is provided, in particular a stepper motor.

11. Two-way horticulture trolley according to claim 8 or 9, wherein for each of the floor-wheels (14) an individual driving motor (18) is provided that is co-turnable therewith.

12. Two-way horticulture trolley according to one of the preceding claims, wherein the control unit (28) further is configured to, when it is detected by the one or more track detectors (30) that the trolley (1) is driven with its track-wheels (11, 12) off one of the head end parts (TP) of the tracks (R), to autonomously control the one or more driving motors (13, 18) to perform the following steps:
• to rotate the floor-wheels (14) for driving the trolley (1) sideways in the second direction (Y) over the corridor (C) over a pre-programmed distance;
• to rotate the track- and/or floor-wheels (11, 12, 14) for driving the trolley (1) forward in the first direction (X) over the corridor (C) until the primary detection detects that an adjacent one of the head end parts (TP) of the tracks (R) is present in front of the track-wheels (11, 12); and
• to rotate the floor-wheels (14) for driving the trolley (1) sideways in the second direction (Y) over the corridor (C) until the secondary detection detects that the track-wheels (11, 12) are lined-up with left and right portions of the track (R).

13. Two-way horticulture trolley according to claim 12, in combination with one of the preceding claims 9-11, wherein the control unit (28) further is configured to, when it is detected by the one or more track detectors (30) that the trolley (1) is driven with its track-wheels (11, 12) off one of the head end parts (TP) of the tracks (R), to autonomously control the one or more driving motors (13, 18) and turning actuators to also perform the following steps:
• to turn the floor-wheels (14) from the first towards the second direction (Y) preceding the step of rotating the floor-wheels (14) for driving the trolley (1) sideways in the second direction (Y) over the corridor (C) over the pre-programmed distance;
• to turn the floor-wheels (14) from the second towards the first direction (Y towards X) preceding the step of rotating the floor-wheels (14) for driving the trolley (1) forward in the first direction (X) over the corridor (C) until the primary detection detects that an adjacent one of the head end parts (TP) of the tracks (R) is present in front of the track-wheels (11, 12);
• to turn the floor-wheels (14) from the first towards the second direction (X towards Y) preceding the step of rotating the floor-wheels (14) for driving the trolley (1) sideways in the second direction (Y) over the corridor (C) until the secondary detection detects that the track-wheels (11, 12) are lined-up with left and right portions of the track (R); and
• to turn the floor-wheels (14) from the second towards the first direction (Y towards X) preceding the step of rotating the track- and/or floor-wheels (11, 12, 14) for driving the trolley (1) forward in the first direction (X) onto and over the track (R).

14. Method for autonomous operation of the two-way horticulture trolley according to one of the preceding claims, that has the control unit (28) autonomously repeat the following steps a number of times:
- have the trolley (1) drive one or more times forward and backward in the first direction (X) with its track-wheels (11, 12) over one of the tracks (R) in between and along growing plants;
- have the trolley (1) drive backwards in the first direction (X) with its track-wheels (11, 12) off the head end part (TP) of that track (R) onto the corridor (C);
- have the floor-wheels (14) placed in a position steering in the second direction (Y) and carrying the trolley (1);
- have the trolley (1) drive sideways in the second direction (Y) with its floor-wheels (14) over the corridor (C) over a pre-programmed distance;
- have the floor-wheels (14) placed in a position steering either in the first direction (X) or no longer carrying the trolley (1);
- have the trolley (1) drive forward in the first direction (X) with its track- and/or floor-wheels (11, 12, 14) over the corridor (C) until the primary detection detects that one of the head end parts (TP) of another one of the tracks (R) is present in front of the track-wheels (11, 12);
- have the floor-wheels (14) placed in a position steering in the second direction (Y) and carrying the trolley (1);
- have the trolley (1) drive sideways in the second direction (Y) with its floor-wheels (14) over the corridor (C) until the secondary detection detects that the track-wheels (11, 12) are lined-up with left and right portions of that other one of the tracks (R);
- have the floor-wheels (14) placed in a position steering either in the first direction (X) or no longer carrying the trolley (1);
- have the trolley (1) drive forward in the first direction (X) off the corridor (C) and with its track-wheels (11, 12) onto the head end part (TP) of that other one of the tracks (R); and
- have the trolley (1) drive one or more times forward and backward in the first direction (X) with its track-wheels (11, 12) over that other one of the tracks (R) in between and along growing plants.

15. Non-volatile storage medium for a control unit (28) of a two-way horticulture trolley (1) according to one of the preceding claims 1-13, storing a machine readable instruction to perform the method according to claim 14.

## Patentansprüche

1. Zweiwege-Gartenbauwagen (1) zum Fahren in verschiedene Richtungen über verschiedene Höhen und/oder Oberflächenarten, wie befestigte Böden und Rohrschienen, Folgendes umfassend:
- einen Rahmen (10);
- Schienenräder (11, 12) zum Fahren des Wagens (1) vorwärts oder rückwärts in eine erste Richtung (X) über Schienen (R), wie Rohrschienen, die sich zwischen und entlang von Pflanzenanbauwegen in die erste Richtung (X) erstrecken;
- Bodenräder (14) zum Fahren des Wagens (1) seitwärts in eine zweite Richtung (Y) über einen Korridor (C), wie einen befestigten Boden, der sich entlang der Enden der Schienen (R) in die zweite Richtung (Y) erstreckt;
- einen oder mehrere Antriebsmotoren (13, 18), die dazu ausgelegt sind, die Schienen- und/oder Bodenräder (11, 12, 14) um ihre horizontale Mittelachse zu rotieren, um den Wagen (1) vorwärts oder rückwärts bzw. seitwärts anzutreiben;
- eine Steuereinheit (28) zum Steuern des einen oder der mehreren Antriebsmotoren (13, 18); und
- eine Detektoreinheit,
**dadurch gekennzeichnet, dass**
die Detektoreinheit einen oder mehrere Schienendetektoren (30) umfasst, die für Folgendes ausgelegt sind:
• Durchführen von Primärerfassungen, ob ein Kopfendenteil (TP) einer der Schienen (R) innerhalb eines bestimmten Bereichs vor oder zumindest links oder rechts von einem der Schienenräder (11, 12) vorhanden ist oder nicht;
• Durchführen von Sekundärerfassungen, ob der linke und rechte Abschnitt des Kopfendenteils (TP) der einen der Schienen (R) sowohl mit den linken als auch den rechten Schienenrädern (11, 12) ausgerichtet sind oder nicht; und
• Senden entsprechender Erfassungssignale zur Steuereinheit (28) in Abhängigkeit von der durchgeführten Primär- und Sekundärerfassung,
wobei die Steuereinheit (28) dazu ausgelegt ist, den einen oder die mehreren Antriebsmotoren (13, 18) in Abhängigkeit von den empfangenen jeweiligen Erfassungssignalen zu steuern.

2. Zweiwege-Gartenbauwagen nach Anspruch 1, wobei die Detektoreinheit mindestens zwei Schienendetektoren (30) umfasst, von denen ein erster und zweiter (30fl, 30fr) für Erfassungen an Positionen direkt vor den Schienenrädern (11, 12) vorgesehen sind.

3. Zweiwege-Gartenbauwagen nach Anspruch 2, wobei der erste und zweite Schienendetektor (30fl, 30fr) an oder unter einem vorderen Ende des Rahmens (10) positioniert sind, wobei der erste Schienendetektor (30fl) direkt vor den linken Schienenrädern (11, 12) liegt und wobei der zweite Schienendetektor (30fr) direkt vor den rechten Schienenrädern (11, 12) liegt.

4. Zweiwege-Gartenbauwagen nach Anspruch 2 oder 3, wobei die Detektoreinheit mindestens drei Schienendetektoren (30) umfasst, von denen ein dritter (30fi) für Erfassungen an einer Zwischenposition vor den Schienenrädern (11, 12, 14) vorgesehen ist.

5. Zweiwege-Gartenbauwagen nach Anspruch 4, wobei der dritte Schienendetektor (30fi) an oder unter dem vorderen Ende des Rahmens (10) positioniert sind, wobei der dritte Schienendetektor (30fi) hinter dem ersten und zweiten Schienendetektor (30fl, 30fr) jedoch vor den Schienenrädern (11, 12) liegt.

6. Zweiwege-Gartenbauwagen nach einem der vorstehenden Ansprüche, wobei jeder des einen oder der mehreren Schienendetektoren (30) einen Metall- und/oder Höhendetektor umfasst, insbesondere einen Induktionssensor, der dazu ausgelegt ist, das Vorhandensein einer Metallschiene (R), wie Metallrohrschienen, zu erfassen und insbesondere von einer schalenförmigen Abdeckplatte bedeckt wird.

7. Zweiwege-Gartenbauwagen nach einem der vorstehenden Ansprüche, wobei jedes Bodenrad (14) einen flexiblen Gummireifen als Lauffläche umfasst.

8. Zweiwege-Gartenbauwagen nach einem der vorstehenden Ansprüche, wobei der Wagen einen Datensammler (24) zum automatischen Sammeln von Daten bezüglich Gesundheit, Wachstum und/oder Ernte der Pflanzen, an denen der Wagen (1) vorbeifährt, umfasst.

9. Zweiwege-Gartenbauwagen nach einem der vorstehenden Ansprüche, wobei die Bodenräder (14) jeweils einzeln um eine eigene vertikale Achse in Bezug zum Rahmen (10) zwischen mindestens der ersten und zweiten Richtung (X, Y) drehbar sind,
wobei ein oder mehrere Drehstellglieder vorgesehen sind, um die Bodenräder (14) zu steuern, sich einzeln um ihre eigene vertikale Achse zwischen mindestens der ersten und zweiten Richtung (X, Y) und umgekehrt zu drehen.

10. Zweiwege-Gartenbauwagen nach Anspruch 9, wobei für jedes der Bodenräder (14) ein einzelnes Drehstellglied vorgesehen ist, insbesondere ein Schrittmotor.

11. Zweiwege-Gartenbauwagen nach Anspruch 8 oder 9, wobei für jedes der Bodenräder (14) ein einzelner Antriebsmotor (18) vorgesehen ist, der damit mitdrehbar ist.

12. Zweiwege-Gartenbauwagen nach einem der vorstehenden Ansprüche, wobei die Steuereinheit (28) ferner dazu ausgelegt ist, den einen oder die mehreren Antriebsmotoren (13, 18) autonom zu steuern, die folgenden Schritte auszuführen, wenn von dem einen oder der mehreren Schienendetektoren (30) erfasst wird, dass der Wagen (1) mit den Schienenrädern (11, 12) von einem der Kopfendenteile (TP) der Schiene (R) heruntergefahren wird:
• die Bodenräder (14) zu drehen, um den Wagen (1) seitwärts in die zweite Richtung (Y) über den Korridor (C) über eine vorprogrammierte Entfernung zu fahren;
• die Schienen- und/oder Bodenräder (11, 12, 14) zu drehen, um den Wagen (1) vorwärts in die erste Richtung (X) über den Korridor (C) zu fahren, bis die Primärerfassung erfasst, dass ein angrenzender der Kopfendenteile (TP) der Schiene (R) vor den Schienenrädern (11, 12) vorhanden ist; und
• die Bodenräder (14) zu drehen, um den Wagen (1) seitwärts in die zweite Richtung (Y) über den Korridor (C) zu fahren, bis die Sekundärerfassung erfasst, dass die Schienenräder (11, 12) mit dem linken und rechten Abschnitt der Schiene (R) ausgerichtet sind.

13. Zweiwege-Gartenbauwagen nach Anspruch 12 in Kombination mit einem der vorstehenden Ansprüche 9-11, wobei die Steuereinheit (28) ferner dazu ausgelegt ist, den einen oder die mehreren Antriebsmotoren (13, 18) autonom zu steuern und Stellglieder zu drehen, um außerdem die folgenden Schritte auszuführen, wenn von dem einen oder der mehreren Schienendetektoren (30) erfasst wird, dass der Wagen (1) mit den Schienenrädern (11, 12) von einem der Kopfendenteile (TP) der Schiene (R) heruntergefahren wird:
• die Bodenräder (14) vor dem Schritt des Drehens der Bodenräder (14), um den Wagen (1) seitwärts in die zweite Richtung (Y) über den Korridor (C) über die vorprogrammierte Entfernung zu fahren, von der ersten in die zweite Richtung (Y) zu drehen;
• die Bodenräder (14) vor dem Schritt des Drehens der Bodenräder (14), um den Wagen (1) vorwärts in die erste Richtung (X) über den Korridor (C) zu fahren, bis die Primärerfassung erfasst, dass ein angrenzender der Kopfendenteile (TP) der Schiene (R) vor den Schienenrädern (11, 12) vorhanden ist, von der zweiten in die erste Richtung (Y nach X) zu drehen;
• die Bodenräder (14) vor dem Schritt des Drehens der Bodenräder (14), um den Wagen (1) seitwärts in die zweite Richtung (Y) über den Korridor (C) zu fahren, bis die Sekundärerfassung erfasst, dass die Schienenräder (11, 12) mit dem linken und rechten Abschnitt der Schiene (R) ausgerichtet sind, von der ersten in die zweite Richtung (X nach Y) zu drehen; und
• die Bodenräder (14) vor dem Schritt des Drehens der Schienen- und/oder Bodenräder (11, 12, 14), um den Wagen (1) vorwärts in die erste Richtung (X) auf und über die Schiene (R) zu fahren, von der zweiten in die erste Richtung (Y nach X) zu drehen.

14. Verfahren zum autonomen Betrieb des Zweiwege-Gartenbauwagens nach einem der vorstehenden Ansprüche, bei dem die Steuereinheit (28) die folgenden Schritte mehrfach autonom ausführt:
- der Wagen (1) fährt einmal oder mehrfach mit den Schienenrädern (11, 12) über einer der Schienen (R) zwischen und entlang von wachsenden Pflanzen vorwärts und rückwärts in die erste Richtung (X);
- der Wagen (1) fährt rückwärts in die erste Richtung (X) mit den Schienenrädern (11, 12) vom Kopfendenteil (TP) der Schiene (R) herunter auf den Korridor (C);
- die Bodenräder (14) werden in eine in die zweite Richtung (Y) lenkende Position gebracht und tragen den Wagen (1);
- der Wagen (1) fährt über eine vorprogrammierte Entfernung seitwärts in die zweite Richtung (Y) mit den Bodenrädern (14) über den Korridor (C);
- die Bodenräder (14) werden entweder in eine in die erste Richtung (X) lenkende Position gebracht oder tragen den Wagen (1) nicht mehr;
- der Wagen (1) fahrt vorwärts in die erste Richtung (X) mit den Schienen- und/oder Bodenrädern (11, 12, 14) über den Korridor (C), bis die Primärerfassung erfasst, dass einer der Kopfendenteile (TP) einer anderen Schiene (R) vor den Schienenrädern (11, 12) vorhanden ist;
- die Bodenräder (14) werden in eine in die zweite Richtung (Y) lenkende Position gebracht und tragen den Wagen (1);
- der Wagen (1) fährt seitwärts in die zweite Richtung (Y) mit den Bodenrädern (14) über den Korridor (C), bis die Sekundärerfassung erfasst, dass die Schienenräder (11, 12) mit dem linken und rechten Abschnitt der anderen Schiene (R) ausgerichtet sind;
- die Bodenräder (14) werden entweder in eine in die erste Richtung (X) lenkende Position gebracht oder tragen den Wagen (1) nicht mehr;
- der Wagen (1) fährt vorwärts in die erste Richtung (X) mit den Schienenrädern (11, 12) vom Korridor (C) herunter auf den Kopfendenteil (TP) der anderen Schiene (R) hinauf und
- der Wagen (1) fährt einmal oder mehrfach mit den Schienenrädern (11, 12) über die andere Schiene (R) zwischen und entlang von wachsenden Pflanzen vorwärts und rückwärts in die erste Richtung (X).

15. Nicht flüchtiges Speichermedium für eine Steuereinheit (28) eines Zweiwege-Gartenbauwagens (1) nach einem der vorstehenden Ansprüche 1-13, das maschinenlesbare Anweisungen zum Ausführen des Verfahrens nach Anspruch 14 speichert.

## Revendications

1. Chariot d'horticulture à double sens (1) pour rouler dans différentes directions sur différentes hauteurs et/ou types de surfaces, comme des sols pavés et des rails tubulaires, comprenant :
- un cadre (10) ;
- des roues de rail (11, 12) pour entraîner le chariot (1) vers l'avant ou vers l'arrière dans une première direction (X) sur des rails (R), comme des rails tubulaires, qui s'étendent dans la première direction (X) entre et le long de voies de culture de plantes ;
- des roues au sol (14) pour entraîner le chariot (1) latéralement dans une seconde direction (Y) sur un couloir (C), comme un sol pavé, qui s'étend dans la seconde direction (Y) le long des extrémités des rails (R) ;
- un ou plusieurs moteurs d'entraînement (13, 18) conçus pour faire tourner les roues de rail et/ou au sol (11, 12, 14) autour de leur axe central horizontal pour entraîner le chariot (1) vers l'avant ou vers l'arrière, respectivement latéralement ;
- une unité de commande (28) pour commander le ou les moteurs d'entraînement (13, 18) ; et
- une unité de détection,
**caractérisé en ce que**
l'unité de détection comprenant un ou plusieurs détecteurs de rail (30) qui sont conçus pour :
• effectuer des détections primaires afin de savoir si une partie extrémité de tête (TP) de l'un des rails (R) est présente ou non dans une certaine zone devant au moins une roue gauche ou droite des roues de rail (11, 12) ;
• effectuer des détections secondaires afin de savoir si les parties gauche et droite de la partie extrémité de tête (TP) de l'une des rails (R) sont alignées ou non avec les roues gauche et droite des roues de rail (11, 12) ; et
• envoyer des signaux de détection respectifs à l'unité de commande (28) en fonction de la détection primaire et secondaire effectuée,
l'unité de commande (28) étant conçue pour commander le ou les moteurs d'entraînement (13, 18) en fonction des signaux de détection respectifs reçus.

2. Chariot d'horticulture bidirectionnel selon la revendication 1, l'unité de détection comprenant au moins deux détecteurs de rail (30), dont un premier et un second (30fl, 30fr) sont fournis pour effectuer des détections à des emplacements situés directement devant les roues de rail (11, 12).

3. Chariot d'horticulture bidirectionnel selon la revendication 2, le premier et le second détecteur de rail (30fl, 30fr) étant positionnés au niveau d'une extrémité avant du cadre (10) ou sous celle-ci, le premier détecteur de rail (30fl) se trouvant directement devant les roues gauches des roues de rail (11, 12) et le second détecteur de rail (30fr) se trouvant directement devant les roues droites des roues de rail (11, 12).

4. Chariot d'horticulture bidirectionnel selon la revendication 2 ou 3, l'unité de détection comprenant au moins trois détecteurs de rail (30), dont un troisième (30fi) est fourni pour effectuer une détection à un emplacement intermédiaire devant les roues de rail (11, 12, 14).

5. Chariot d'horticulture bidirectionnel selon la revendication 4, le troisième détecteur de rail (30fi) étant positionné au niveau de l'extrémité avant du cadre (10) ou sous celle-ci, le troisième détecteur de rail (30fi) se trouvant derrière les premier et deuxième détecteurs de rail (30fl, 30fr) mais toujours devant les roues de rail (11, 12).

6. Chariot d'horticulture bidirectionnel selon l'une des revendications précédentes, chacun du ou des détecteurs de rails (30) comprenant un détecteur de métal et/ou de hauteur, en particulier un capteur inductif conçu pour détecter la présence de rails métalliques (R), tels que des rails tubulaires métalliques, et plus particulièrement recouverts d'une plaque de recouvrement en forme de parabole.

7. Chariot d'horticulture à double sens selon l'une des revendications précédentes, chaque roue au sol (14) comprenant un pneu en caoutchouc souple comme bande de roulement.

8. Chariot d'horticulture à double sens selon l'une des revendications précédentes, le chariot comprenant un collecteur de données (24) destiné à collecter automatiquement des données sur la santé, la croissance et/ou la récolte des plantes devant lesquelles le chariot (1) passe.

9. Chariot d'horticulture bidirectionnel selon l'une des revendications précédentes, les roues au sol (14) pouvant chacune tourner individuellement autour d'un axe vertical propre par rapport au cadre (10) entre au moins la première et la seconde direction (X, Y), un ou plusieurs actionneurs de rotation étant fournis pour commander aux roues au sol (14) de tourner individuellement autour de leur propre axe vertical entre au moins la première et la seconde direction (X, Y) et vice versa.

10. Chariot d'horticulture bidirectionnel selon la revendication 9, pour chacune des roues au sol (14), un actionneur de rotation individuel étant fourni, en particulier un moteur pas à pas.

11. Chariot d'horticulture bidirectionnel selon la revendication 8 ou 9, pour chacune des roues au sol (14), un moteur d'entraînement individuel (18) étant fourni qui peut tourner avec elle.

12. Chariot d'horticulture bidirectionnel selon l'une des revendications précédentes, l'unité de commande (28) étant en outre conçue pour, lorsqu'il est détecté par le ou les détecteurs de rail (30) que le chariot (1) est entraîné avec ses roues de rail (11, 12) hors de l'une des parties extrémité avant (TP) des rails (R), commander de manière autonome le ou les moteurs d'entraînement (13, 18) afin d'effectuer les étapes suivantes :
• faire tourner les roues au sol (14) pour entraîner le chariot (1) latéralement dans la seconde direction (Y) sur le couloir (C) sur une distance préprogrammée ;
• faire tourner les roues de rail et/ou au sol (11, 12, 14) pour entraîner le chariot (1) vers l'avant dans la première direction (X) sur le couloir (C) jusqu'à ce que la détection primaire détecte qu'une partie extrémité de tête (TP) adjacente des rails (R) est présente devant les roues de rail (11, 12) ; et
• faire tourner les roues au sol (14) pour entraîner le chariot (1) latéralement dans la seconde direction (Y) sur le couloir (C) jusqu'à ce que la détection secondaire détecte que les roues de rail (11, 12) sont alignées avec les parties gauche et droite du rail (R).

13. Chariot d'horticulture bidirectionnel selon la revendication 12, en combinaison avec l'une des revendications précédentes 9 à 11, l'unité de commande (28) étant en outre conçue pour, lorsqu'il est détecté par le ou les détecteurs de rail (30) que le chariot (1) est entraîné avec ses roues de rail (11, 12) hors de l'une des parties extrémité avant (TP) des rails (R), commander de manière autonome le ou les moteurs d'entraînement (13, 18) et actionneurs de rotation afin d'effectuer également les étapes suivantes :
• tourner les roues au sol (14) de la première à la seconde direction (Y) avant l'étape de rotation des roues au sol (14) pour entraîner le chariot (1) latéralement dans la seconde direction (Y) sur le couloir (C) sur la distance préprogrammée ;
• faire tourner les roues au sol (14) de la seconde vers la première direction (Y vers X) avant l'étape de rotation des roues au sol (14) pour entraîner le chariot (1) vers l'avant dans la première direction (X) sur le couloir (C) jusqu'à ce que la détection primaire détecte qu'une partie extrémité de tête (TP) adjacente des rails (R) est présente devant les roues de rails (11, 12) ;
• faire tourner les roues au sol (14) de la première vers la seconde direction (X vers Y) avant l'étape de rotation des roues au sol (14) pour entraîner le chariot (1) latéralement dans la seconde direction (Y) sur le couloir (C) jusqu'à ce que la détection secondaire détecte que les roues de rail (11, 12) sont alignées avec les parties gauche et droite du rail (R) ; et
• faire tourner les roues au sol (14) de la seconde vers la première direction (Y vers X) avant l'étape de rotation des roues de rail et/ou au sol (11, 12, 14) pour entraîner le chariot (1) vers l'avant dans la première direction (X) sur et au-dessus du rail (R).

14. Procédé de fonctionnement autonome du chariot d'horticulture bidirectionnel selon l'une des revendications précédentes, qui comprend l'unité de commande (28) répétant de manière autonome les étapes suivantes un certain nombre de fois :
- entraîner le chariot (1) vers l'avant et vers l'arrière une ou plusieurs fois dans la première direction (X) avec ses roues de rail (11, 12) sur l'un des rails (R) entre et le long des plantes cultivées ;
- entraîner le chariot (1) vers l'arrière dans la première direction (X) avec ses roues de rail (11, 12) hors de la partie extrémité avant (TP) de ce rail (R) sur le couloir (C) ;
- placer les roues au sol (14) dans une position de direction dans la seconde direction (Y) et porter le chariot (1) ;
- entraîner le chariot (1) latéralement dans la seconde direction (Y) avec ses roues au sol (14) sur le couloir (C) sur une distance préprogrammée ;
- placer les roues au sol (14) dans une position de direction dans la première direction (X) ou ne portant plus le chariot (1) ;
- entraîner le chariot (1) vers l'avant dans la première direction (X) avec ses roues de rail et/ou au sol (11, 12, 14) sur le couloir (C) jusqu'à ce que la détection primaire détecte que l'une des parties extrémité de tête (TP) d'un autre des rails (R) est présente devant les roues de rail (11, 12) ;
- placer les roues au sol (14) dans une position de direction dans la seconde direction (Y) et porter le chariot (1) ;
- entraîner le chariot (1) latéralement dans la seconde direction (Y) avec ses roues au sol (14) sur le couloir (C) jusqu'à ce que la détection secondaire détecte que les roues de rail (11, 12) sont alignées avec les parties gauche et droite de l'autre rail (R) ;
- placer les roues au sol (14) dans une position de direction dans la première direction (X) ou ne portant plus le chariot (1) ;
- entraîner le chariot (1) vers l'avant dans la première direction (X) hors du couloir (C) et avec ses roues de rail (11, 12) sur la partie extrémité avant (TP) de l'autre rail (R) ; et
- entraîner le chariot (1) vers l'avant et vers l'arrière une ou plusieurs fois dans la première direction (X) avec ses roues de rail (11, 12) sur l'autre des rails (R) entre et le long des plantes cultivées.

15. Support de stockage non volatil pour une unité de commande (28) d'un chariot d'horticulture bidirectionnel (1) selon l'une des revendications précédentes 1 à 13, stockant une instruction lisible par machine pour exécuter le procédé selon la revendication 14.
